(19) Europäisches Patentamt
European Patent Office
Office européen des brevets

(11) EP 3 907 152 B1

(12) # EUROPEAN PATENT SPECIFICATION

(45) Date of publication and mention of the grant of the patent:
**23.08.2023 Bulletin 2023/34**

(21) Application number: **20776768.2**

(22) Date of filing: **18.03.2020**

(51) International Patent Classification (IPC):
***B65D 65/46*** (2006.01) ***C08K 5/092*** (2006.01)
***C08L 29/04*** (2006.01) ***C08F 216/06*** (2006.01)
***C08K 5/053*** (2006.01) ***C08F 220/58*** (2006.01)
***C08F 226/10*** (2006.01) ***C08J 5/18*** (2006.01)

(52) Cooperative Patent Classification (CPC):
(C-Sets available)
**C08F 216/06; C08J 5/18; C08K 5/092; C08L 29/04;**
C08J 2329/04; C08J 2429/04; C08K 2201/014;
C08L 2205/03; Y02W 90/10 (Cont.)

(86) International application number:
**PCT/JP2020/012091**

(87) International publication number:
**WO 2020/196185 (01.10.2020 Gazette 2020/40)**

(54) **WATER-SOLUBLE PACKAGING FILM**

WASSERLÖSLICHE VERPACKUNGSFOLIE

FILM D'EMBALLAGE SOLUBLE DANS L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2019 JP 2019058642**

(43) Date of publication of application:
**10.11.2021 Bulletin 2021/45**

(73) Proprietor: **Sekisui Chemical Co., Ltd.**
**Osaka-shi, Osaka 530-0047 (JP)**

(72) Inventor: **YONEDA, Yoshikazu**
**Koka-shi, Shiga 528-8585 (JP)**

(74) Representative: **Cabinet Beau de Loménie**
**158, rue de l'Université**
**75340 Paris Cedex 07 (FR)**

(56) References cited:
**JP-A- 2003 104 435**
**JP-A- 2018 031 015**
**US-A1- 2017 369 217**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)

C-Sets
**C08F 216/06, C08F 220/585;**
**C08F 216/06, C08F 226/10;**
**C08K 5/092, C08L 29/04;**
**C08L 29/04, C08K 5/0016, C08L 29/04,**
**C08L 29/04;**
**C08L 29/04, C08K 5/053, C08L 29/04, C08L 29/04;**
**C08L 29/04, C08K 5/092, C08L 29/04, C08L 29/04**

## Description

TECHNICAL FIELD

The present invention relates to a water-soluble packaging film which is capable of preventing appearance defects such as clouding and deterioration of sealing properties, especially heat sealing properties, over a long period of time and achieving less deterioration and excellent water solubility after packaging.

BACKGROUND ART

Polyvinyl alcohol (hereafter, also referred to as PVA) has been widely used as a packaging material because it is excellent in transparency, oil resistance, chemical resistance, and gas barrier properties against oxygen or the like. PVA has been often used as a packaging material for food, pharmaceuticals, industrial chemicals, agrochemicals, and the like whose properties are greatly affected by deterioration due to oxidation.

In addition, PVA has been also used as a film or sheet for temporary protection of products and parts because of its high water solubility. PVA used as a film for temporary protection, such as surface protection during metalworking, protection during vulcanization of rubber parts, and surface protection of resin molded articles, can be easily removed by water, warm water, or hot water. This enables omission of a step of peeling and discarding the protective films.

As such a PVA film, for example, Patent Literature 1 discloses a water-soluble film containing: 50% by weight or more of a water-soluble polyvinyl alcohol resin having an average viscosity in the range of about 13. 5 to about 20 cP and a hydrolysis degree in the range of about 84 to about 92%; and 30% by weight or less of a PVOH resin having an average viscosity of lower than about 11 cP.

Patent Literature 2 discloses a water-soluble film containing 1 to 50 parts by weight of a plasticizer and 5 to 50 parts by weight of starch based on 100 parts by weight of a sulfonic acid-modified polyvinyl alcohol.

Patent Literature 3 discloses a water-soluble film formed from a pyrrolidone ring-containing polyvinyl alcohol containing 1 to 20 mol% of a copolymerization unit containing a 1,2-pyrrolidone ring in a molecule and having a saponification degree of 50 to 99 mol%. JP 2003-104435 discloses a water-soluble film for packaging a chlorine-containing compound, comprising a modified polyvinyl alcohol (PVOH) containing 1 to 10 mol% of an N-vinylamide monomer unit in the molecule.

CITATION LIST

- Patent Literature

Patent Literature 1: JP 2013-518008 T
Patent Literature 2: JP 2001-106854 A
Patent Literature 3: JP H02-124945 A


SUMMARY OF INVENTION

- Technical Problem

Unfortunately, the water-soluble film disclosed in Patent Literature 1 has low resistance to chlorine-containing sanitary agents, oxidizing chemicals, or the like, is deteriorated over time, and becomes insoluble or poorly soluble in water during long-term storage, which prevents use as a water-soluble film. The water-soluble film disclosed in Patent Literature 2 also has low resistance to chemicals, which deteriorates the film.

Meanwhile, the water-soluble film disclosed in Patent Literature 3 has excellent chemical resistance. Unfortunately, the pyrrolidone ring reduces the water solubility of the polyvinyl alcohol, which gives disadvantages to the film when used for packaging chemicals, such as taking time for releasing the chemicals.

Besides, conventional products after long-term storage such as 6-month storage may have appearance defects such as clouding on the surfaces thereof or deterioration of sealing properties, especially heat sealing properties. These disadvantages may be overcome by reducing additive components. Unfortunately, such reduction of additive components reduces the resistance to medicines (chemical resistance) required for packaging chemicals.

The present invention aims to provide a water-soluble packaging film which is capable of preventing appearance defects such as clouding and deterioration of sealing properties, especially heat sealing properties, over a long period of time and achieving less deterioration and excellent water solubility after packaging.

- Solution to Problem

The present invention relates to a water-soluble packaging film containing: a polyvinyl alcohol; a plasticizer; and a dicarboxylic acid containing a hydroxy group, the dicarboxylic acid containing a hydroxy group having a hydroxy group coefficient, which is a quotient of dividing a weight average molecular weight by the number of hydroxy groups, of 90 or more, the film containing the dicarboxylic acid containing a hydroxy group in an amount of 1 to 5 parts by weight.

The present invention will be described in detail below.

The present inventor found that addition of predetermined proportions of a plasticizer and a dicarboxylic acid containing a hydroxy group to a polyvinyl alcohol as a component of a PVA film can provide a water-soluble packaging film which is capable of preventing appearance defects such as clouding and a reduction in strength of a sealing portion over a long period of time. The inventor also found that such a water-soluble packaging film used as a chemical-packaging film for packaging chemicals is less likely to suffer deterioration of water solubility due to contact with the chemicals even after long-term storage, completing the present invention.

Hereinafter, components used for the water-soluble packaging film of the present invention are described.

(Polyvinyl alcohol (PVA))

The water-soluble packaging film of the present invention contains polyvinyl alcohol.

The polyvinyl alcohol is a main constituent material of the water-soluble packaging film of the present invention.

The polyvinyl alcohol includes unmodified polyvinyl alcohols as well as modified polyvinyl alcohols. Examples of the modified polyvinyl alcohols include a sulfonic acid-modified polyvinyl alcohol, a pyrrolidone ring-modified polyvinyl alcohol, an amine-modified polyvinyl alcohol, and a carboxylic acid-modified polyvinyl alcohol.

The polyvinyl alcohol is obtained by polymerizing a vinyl ester to prepare a polymer and saponifying, namely hydrolyzing the polymer in accordance with a conventionally known method. For saponification, an alkali or an acid is commonly used. Preferably, an alkali is used for saponification. As the polyvinyl alcohol, one type of polyvinyl alcohol may be used or two or more types of polyvinyl alcohols may be used in combination.

Examples of the vinyl ester include vinyl acetate, vinyl formate, vinyl propionate, vinyl butyrate, vinyl pivalate, vinyl versatate, vinyl laurate, vinyl stearate, and vinyl benzoate.

The vinyl ester may be polymerized by any method. Examples of the polymerization method include solution polymerization, bulk polymerization, and suspension polymerization.

Examples of a polymerization catalyst used in polymerization of the vinyl ester include 2-ethylhexyl peroxydicarbonate ("TrigonoxEHP" available from Tianjin McEIT Co., ltd.), 2,2'-azobisisobutyronitrile (AIBN), and t-butyl peroxyneodecanoate. The examples also include bis(4-t-butylcyclohexyl) peroxydicarbonate, di-n-propyl peroxydicarbonate, di-n-butyl peroxydicarbonate, di-cetyl peroxydicarbonate, and di-sec-butyl peroxydicarbonate. These polymerization catalysts may be used alone, or in combination of two or more.

The polymer obtained by polymerizing the vinyl ester is preferably a polyvinyl ester because the saponification degree can be easily controlled within a preferable range. The polymer obtained by polymerizing the vinyl ester may be a copolymer of the vinyl ester and a different monomer. In other words, the polyvinyl alcohol may be prepared from a copolymer of a vinyl ester and the different monomer. Examples of the different monomer, namely, a co-monomer to be copolymerized, include olefins, (meth)acrylic acid and salts thereof, (meth)acrylates, (meth)acrylamide derivatives, N-vinyl amides, vinyl ethers, nitriles, and vinyl halides. The examples also include allyl compounds, maleic acid and salts thereof, maleates, itaconic acid and salts thereof, itaconates, vinylsilyl compounds, and isopropenyl acetate. The different monomers may be used alone, or in combination of two or more.

Examples of the olefins include ethylene, propylene, 1-butene, and isobutene. Examples of the (meth)acrylates include methyl (meth)acrylate, ethyl (meth)acrylate, n-propyl (meth)acrylate, i-propyl (meth)acrylate, n-butyl (meth)acrylate, and 2-ethylhexyl (meth)acrylate. Examples of the (meth)acrylamide derivatives include acrylamide, n-methylacrylamide, N-ethylacrylamide, N,N-dimethylacrylamide, and (meth)acrylamidepropanesulfonic acid and salts thereof. Examples of the N-vinyl amides include N-vinylpyrrolidone, N-vinyl formamide, N-vinyl acetamide, and N-methyl-N-vinyl acetamide. Examples of the vinyl ethers include methyl vinyl ether, ethyl vinyl ether, n-propyl vinyl ether, i-propyl vinyl ether, and n-butyl vinyl ether. Examples of the nitriles include (meth)acrylonitrile. Examples of the vinyl halides include vinyl chloride and vinylidene chloride. Examples of the allyl compounds include allyl acetate and allyl chloride. Examples of the vinylsilyl compounds include vinyltrimethoxysilane.

The polyvinyl alcohol preferably contains a sulfonic acid-modified polyvinyl alcohol.

When the sulfonic acid-modified polyvinyl alcohol is contained, the resistance to medicines of the water-soluble packaging film and the dissolution time thereof upon release of chemicals can be easily controlled.

Examples of the sulfonic acid-modified polyvinyl alcohol include, in addition to those obtained by copolymerization of an unmodified polyvinyl alcohol and a monomer containing a sulfonic acid group, those obtained by addition of a sulfonic acid group to an unmodified polyvinyl alcohol.

The sulfonic acid-modified polyvinyl alcohol is not limited as long as a sulfonic acid group is introduced by modification, and is preferably one in which a sulfonic acid group is bonded to a polymer main chain through a linking group.

Examples of the linking group include an amide group, an alkylene group, an ester group, and an ether group. In particular, a combination of an amide group and an alkylene group is preferred.

The sulfonic acid group is preferably formed from a sulfonate, and is particularly preferably a sodium sulfonate group.

The sulfonic acid-modified polyvinyl alcohol is particularly preferably one in which a sodium sulfonate group is bonded to a polymer main chain through a linking group. More preferred is one in which a sodium sulfonate group is bonded to a polymer main chain through an amide group. Still more preferred is one in which a sodium sulfonate group is bonded to a polymer main chain through an amide group and an alkylene group.

When the sulfonic acid-modified polyvinyl alcohol is a sodium sulfonate-modified polyvinyl alcohol, sodium sulfonate-modified polyvinyl alcohol preferably has a structural unit represented by the following formula (1):

[Chem. 1]

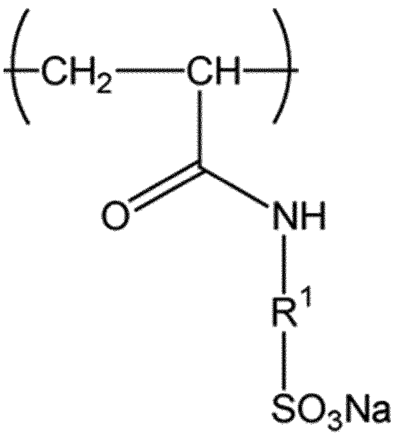

(1)

wherein $R^1$ represents a C1-C4 alkylene group.

Regarding the amount of the structural unit having a sulfonic acid group in the sulfonic acid-modified polyvinyl alcohol (hereinafter, also referred to as a sulfonic acid-modified amount), the lower limit is preferably 0.1 mol%, more preferably 0.2 mol%, still more preferably 0.5 mol%, particularly preferably 1.0 mol%. The upper limit of the sulfonic acid-modified amount is preferably 9.0 mol%, more preferably 7.0 mol%, still more preferably 6.0 mol%, further more preferably 5.5 mol%, particularly preferably 5.0 mol%, most preferably 4.5 mol%.

When the sulfonic acid-modified amount satisfies the preferred lower limit and the preferred upper limit, the resistance to medicines of the water-soluble packaging film and the dissolution time thereof upon release of chemicals can be easily controlled.

Regarding the saponification degree of the sulfonic acid-modified polyvinyl alcohol, the lower limit is preferably 80.0 mol%, more preferably 85.0 mol%, still more preferably 87.0 mol%, particularly preferably 90.0 mol%. The upper limit of the saponification degree is preferably 99.9 mol%, more preferably 99.0 mol%, still more preferably 98.0 mol%, particularly preferably 97.0 mol%.

When the saponification degree satisfies the preferred lower limit and the preferred upper limit, the water resistance of the water-soluble packaging film and the dissolution time thereof upon release of chemicals can be easily controlled.

In order to further enhance the balance between the water resistance and the dissolution time, the saponification degree of the sulfonic acid-modified polyvinyl alcohol is particularly preferably 85.0 mol% or higher and 97.0 mol% or lower.

The sulfonic acid-modified polyvinyl alcohol has a standard deviation ($\sigma$) of the saponification degree distribution of preferably 0.1 to 1.0 moll.

When the standard deviation of the saponification degree distribution satisfies the preferred lower limit and the preferred upper limit, the water-soluble packaging film has better solubility and better chemical resistance to achieve well-balanced improvement in the dissolution time of the film upon release of chemicals and the storage period thereof when used for packaging chemicals.

Regarding the standard deviation of the saponification degree distribution of the sulfonic acid-modified polyvinyl alcohol, the lower limit is more preferably 0.2 mol%, and the upper limit is more preferably 0.9 mol%.

The polymerization degree of the sulfonic acid-modified polyvinyl alcohol is not limited, and the lower limit

thereof is preferably 400, more preferably 500, still more preferably 600, particularly preferably 900. The upper limit of the polymerization degree is preferably 2,000, more preferably 1,800, still more preferably 1,500. When the polymerization degree satisfies the preferred lower limit and the preferred upper limit, an aqueous solution thereof has an appropriate viscosity for formation of a water-soluble packaging film. When the polymerization degree satisfies the preferred upper limit, the water-soluble packaging film has better strength to have water resistance.

Examples of a method for producing the sulfonic acid-modified polyvinyl alcohol include a method in which, upon polymerization of an unmodified polyvinyl alcohol, the unmodified polyvinyl alcohol is copolymerized with a monomer containing a sulfonic acid group, and a method in which a sulfonic acid group is added to an unmodified polyvinyl alcohol.

The amount of the sulfonic acid-modified polyvinyl alcohol is preferably 10 to 100 parts by weight in 100 parts by weight of the polyvinyl alcohol.

Containing the sulfonic acid-modified polyvinyl alcohol in an amount of 10 parts by weight or more allows the water-soluble packaging film to have improved chemical resistance and to maintain high water solubility even after long-term storage after packaging. In order to adjust the film physical properties (e.g., tensile strength, elongation at break, and modulus) of the resulting water-soluble film, an unmodified polyvinyl alcohol and a pyrrolidone ring-modified polyvinyl alcohol can be appropriately used in combination.

Regarding the amount of the sulfonic acid-modified polyvinyl alcohol, the lower limit is preferably 25 parts by weight, more preferably 50 parts by weight, and the upper limit is preferably 90 parts by weight, more preferably 80 parts by weight, in 100 parts by weight of the polyvinyl alcohol.

Preferably, the polyvinyl alcohol further includes a pyrrolidone ring-modified polyvinyl alcohol.

Containing the pyrrolidone ring-modified polyvinyl alcohol allows the water-soluble packaging film to have less discoloration even when used for packaging a chlorine-containing sanitary agent or an oxidizing chemical.

The pyrrolidone ring-modified polyvinyl alcohol is not limited as long as a pyrrolidone ring-containing group is introduced by modification, and is preferably one in which a pyrrolidone ring-containing group is bonded to a polymer main chain directly or through a linking group. Examples of the linking group include an aliphatic group, an aromatic group, an amide group, an alkylene group, an ester group, and an ether group. The carbon number of the aliphatic group is preferably 1 to 6, more preferably 1 to 4, and the carbon number of the aromatic group is preferably 12 or less. Examples of the pyrrolidone ring-modified polyvinyl alcohol include one obtained by copolymerization of an unmodified polyvinyl alcohol and a monomer containing a pyrrolidone ring-containing group and one obtained by addition of a pyrrolidone ring-containing group to an unmodified polyvinyl alcohol. The pyrrolidone ring-modified polyvinyl alcohol may be a polyvinyl alcohol containing a vinyl pyrrolidone oligomer as a graft chain.

The pyrrolidone ring-modified polyvinyl alcohol preferably has a structural unit having a pyrrolidone ring-containing group, represented by the following formula (2):

[Chem. 2]

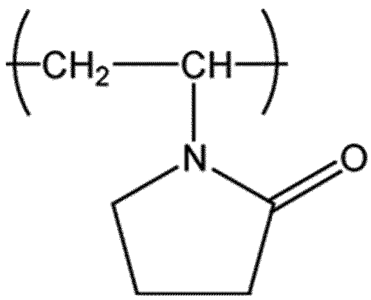

(2)

Regarding the amount of the structural unit having a pyrrolidone ring-containing group in the pyrrolidone ring-modified polyvinyl alcohol (hereinafter, also referred to as a pyrrolidone ring-modified amount), the lower limit is preferably 0.1 mol%, more preferably 0.2 mol%, still more preferably 0.5 mol%, particularly preferably 1.0 mol%. The upper limit of the pyrrolidone ring-modified amount is preferably 20.0 mol%, more preferably 18.0 mol%, still more preferably 15.0 mol%, particularly preferably 10.0 mol%.

When the pyrrolidone ring-modified amount satisfies the preferred lower limit and the preferred upper limit, the resulting film is less likely to be discolored even when used for packaging a chlorine-containing sanitary agent or an oxidizing chemical.

Regarding the saponification degree of the pyrrolidone ring-modified polyvinyl alcohol, the lower limit is preferably 80.0 mol%, more preferably 85.0 mol%, still more preferably 87.0 mol%, particularly preferably 90.0 mol%. The upper limit of the saponification degree is preferably 99.9 mol%, more preferably 99.0 mol%, still more preferably 98.0 mol%, particularly preferably 97.0 mol%.

When the saponification degree satisfies the preferred lower limit and the preferred upper limit, the water

resistance of the water-soluble packaging film and the dissolution time thereof upon release of chemicals can be easily controlled.

In order to further enhance the balance between the water resistance and the dissolution time, the saponification degree of the pyrrolidone ring-modified polyvinyl alcohol is particularly preferably 85.0 mol% or higher and 97.0 mol% or lower.

The saponification degree is measured in conformity with JIS K6726. The saponification degree indicates the proportion of units actually saponified to vinyl alcohol units among units to be converted to vinyl alcohol units by saponification.

The saponification degree may be adjusted by any method. The saponification degree can be appropriately adjusted by saponification conditions, namely, hydrolysis conditions.

The pyrrolidone ring-modified polyvinyl alcohol has a standard deviation ($\sigma$) of the saponification degree distribution of preferably 0.1 to 1.0 mol%.

When the standard deviation of the saponification degree distribution satisfies the preferred lower limit and the preferred upper limit, the water-soluble packaging film has better solubility and better chemical resistance to achieve well-balanced improvement in the dissolution time of the film upon release of chemicals and the storage period thereof when used for packaging chemicals.

Regarding the standard deviation of the saponification degree distribution of the pyrrolidone ring-modified polyvinyl alcohol, the lower limit is more preferably 0.2 mol%, and the upper limit is more preferably 0.9 mol%.

The standard deviation of the saponification degree distribution is an index showing variations of the saponification degree in PVA, and can be calculated based on the measurement by FT-IR or the like.

The polymerization degree of the pyrrolidone ring-modified polyvinyl alcohol is not limited, and the lower limit is preferably 400, more preferably 500, still more preferably 600, particularly preferably 900. The upper limit of the polymerization degree is preferably 2,000, more preferably 1,800, still more preferably 1,500. When the polymerization degree satisfies the preferred lower limit and the preferred upper limit, an aqueous solution thereof has an appropriate viscosity for formation of a water-soluble packaging film. When the polymerization degree satisfies the preferred upper limit, the water-soluble packaging film has better strength to have water resistance. The polymerization degree is measured in conformity with JIS K6726.

Examples of a method for producing the pyrrolidone ring-modified polyvinyl alcohol include a method of copolymerizing an unmodified polyvinyl alcohol and a monomer containing a pyrrolidone ring-containing group and a method of adding a pyrrolidone ring-containing group to an unmodified polyvinyl alcohol.

The amount of the pyrrolidone ring-modified polyvinyl alcohol is preferably 0.1 to 50 parts by weight in 100 parts by weight of the polyvinyl alcohol.

Containing the pyrrolidone ring-modified polyvinyl alcohol in an amount of 0.1 parts by weight or more and 50 parts by weight or less allows the resulting film to have all of the resistance to medicines, film physical properties, and water solubility at high levels.

Regarding the amount of the pyrrolidone ring-modified polyvinyl alcohol, the lower limit is more preferably 10 parts by weight, still more preferably 20 parts by weight, and the upper limit is more preferably 45 parts by weight, still more preferably 35 parts by weight, in 100 parts by weight of the polyvinyl alcohol.

When the pyrrolidone ring-modified polyvinyl alcohol and the sulfonic acid-modified polyvinyl alcohol are both contained, the following is preferred.

The ratio of the amount of the structural unit having a pyrrolidone ring-containing group in the pyrrolidone ring-modified polyvinyl alcohol and the amount of the structural unit having a sulfonic acid group in the sulfonic acid-modified polyvinyl alcohol (amount of a structural unit having a pyrrolidone ring-containing group/amount of a structural unit having a sulfonic acid group) is preferably within a predetermined range. Regarding the ratio of amount of a structural unit having a pyrrolidone ring-containing group/amount of a structural unit having a sulfonic acid group, the lower limit is preferably 0.08, more preferably 0.1, still more preferably 0.2, and the upper limit is preferably 3, more preferably 2, still more preferably 1. This structure can reduce or prevent bleeding and deterioration of sealing properties (especially, heat sealing properties).

When the pyrrolidone ring-modified polyvinyl alcohol and the sulfonic acid-modified polyvinyl alcohol are both contained, the following is preferred.

The ratio by weight of the pyrrolidone ring-modified polyvinyl alcohol and the sulfonic acid-modified polyvinyl alcohol (pyrrolidone ring-modified polyvinyl alcohol/sulfonic acid-modified polyvinyl alcohol) is preferably within a predetermined range in order to reduce or prevent bleeding and deterioration of sheet forming properties. Regarding the ratio of pyrrolidone ring-modified polyvinyl alcohol/sulfonic acid-modified polyvinyl alcohol, the lower limit is preferably 0.1, more preferably 0.2, still more preferably 0.25, and the upper limit is preferably 2, more preferably 1.5, still more preferably 1.

Regarding the ratio of the polymerization degree of the pyrrolidone ring-modified polyvinyl alcohol and the polymerization degree of the sulfonic acid-modified polyvinyl alcohol (polymerization degree of the pyrrolidone ring-modified polyvinyl alcohol/polymerization degree of the sulfonic acid-modified polyvinyl alcohol), the lower limit is preferably 0.5, more preferably 0.8, and the upper limit is preferably 1.5, more preferably 1.2.

The polyvinyl alcohol may contain an unmodified polyvinyl alcohol in addition to the pyrrolidone ring-modified polyvinyl alcohol and the sulfonic acid-modified polyvinyl alcohol.

In the unmodified polyvinyl alcohol, the lower limit of the saponification degree is preferably 80.0 mol%, and the upper limit thereof is preferably 99.0 moll.

When the saponification degree satisfies the lower limit and the upper limit, the water resistance of the water-soluble packaging film and the dissolution time thereof upon release of chemicals can be easily controlled, and the film can achieve well-balanced improvement in the water resistance and the dissolution time.

Regarding the saponification degree of the unmodified polyvinyl alcohol, the lower limit is more preferably 85.0 mol%, and the upper limit is more preferably 95.0 mol%.

The unmodified polyvinyl alcohol has a standard deviation ($\sigma$) of the saponification degree distribution of preferably 0.1 to 1.0 mol%.

When the standard deviation of the saponification degree distribution satisfies the lower limit and the upper limit, the PVA film has better solubility and better chemical resistance to achieve well-balanced improvement in the dissolution time of the film upon release of chemicals and the storage period thereof when used for packaging chemicals.

Regarding the standard deviation of the saponification degree distribution of the PVA, the lower limit is more preferably 0.2 mol%, and the upper limit is more preferably 0.9 mol%.

The polymerization degree of the unmodified polyvinyl alcohol is not limited. The lower limit of the polymerization degree of the unmodified polyvinyl alcohol is preferably 400, more preferably 500, still more preferably 600, particularly preferably 900. The upper limit of the polymerization degree is preferably 2,500, more preferably 2,000, still more preferably 1,500. When the polymerization degree satisfies the lower limit and the upper limit, an aqueous solution thereof has an appropriate viscosity for formation of a water-soluble packaging film. When the polymerization degree satisfies the above upper limit, the PVA film has better strength to have water resistance.

Regarding the amount of the unmodified polyvinyl alcohol in 100 parts by weight of the polyvinyl alcohol, the lower limit is preferably 5 parts by weight, and the upper limit is preferably 30 parts by weight.

Also, the polyvinyl alcohol may include a different modified polyvinyl alcohol other than the pyrrolidone ring-modified polyvinyl alcohol and the sulfonic acid-modified polyvinyl alcohol.

Examples of the different modified polyvinyl alcohol include modified polyvinyl alcohols containing modification groups such as an amino group and a carboxy group (e.g., amine-modified polyvinyl alcohols and carboxylic acid-modified polyvinyl alcohols).

The different modified polyvinyl alcohol may be one obtained by copolymerization of an unmodified polyvinyl alcohol and a monomer containing a modification group or one obtained by addition of a modification group to an unmodified polyvinyl alcohol.

When the different modified polyvinyl alcohol is an amino group-modified polyvinyl alcohol, the amino group-modified polyvinyl alcohol preferably has a structural unit represented by the following formula (3):

[Chem. 3]

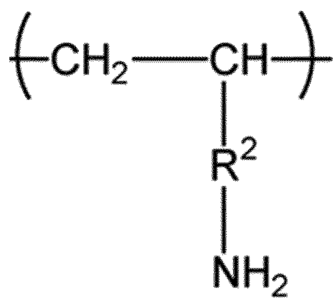

(3)

wherein $R^2$ represents a single bond or a C0-C10 alkylene group.

When the different modified polyvinyl alcohol is a carboxy group-modified polyvinyl alcohol, the carboxy group-modified polyvinyl alcohol preferably has a structural unit represented by the following formula (4-1), (4-2), or (4-3):

[Chem. 4]

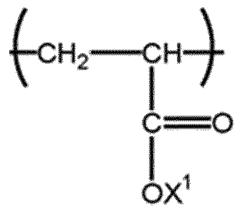
(4-1)
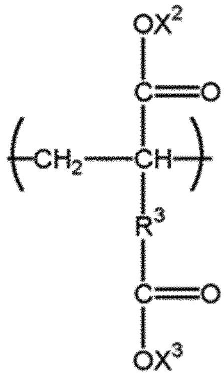
(4-2)
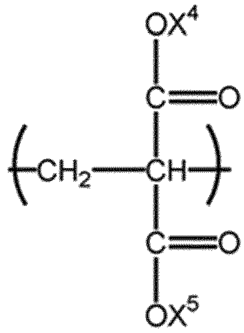
(4-3)

wherein $X^1$, $X^2$, $X^3$, $X^4$, and $X^5$ each independently represent a hydrogen atom, a metal atom, or a methyl group. In other words, the carboxy group included in the structural unit having a carboxy group as used herein includes salts and methyl esters of carboxy groups. An example of the metal atom is a sodium atom.

In the formula (4-2), $R^3$ represents a C1-C10 alkylene group.

Regarding the amount of the structural unit having a modification group in the different modified polyvinyl alcohol, the lower limit is preferably 0.2 mol%, and the upper limit is preferably 10 moll. When the amount of the structural unit having a modification group satisfies the lower limit and the upper limit, the resulting film is resistant to chlorine-containing sanitary agents or oxidizing chemicals, namely, not discolored or torn by such agents or chemicals over a long period of time.

The lower limit of the amount of the structural unit having a modification group is more preferably 0.5 mol%, and the upper limit thereof is more preferably 8 mol%.

Regarding the amount of the different modified polyvinyl alcohol in 100 parts by weight of the polyvinyl alcohol, the lower limit is preferably 1 part by weight, and the upper limit is preferably 10 parts by weight.

The polyvinyl alcohol is preferably a polyvinyl alcohol including a sulfonic acid-modified polyvinyl alcohol and a pyrrolidone ring-modified polyvinyl alcohol, a polyvinyl alcohol including a sulfonic acid-modified polyvinyl alcohol alone, or a polyvinyl alcohol including a sulfonic acid-modified polyvinyl alcohol and an unmodified polyvinyl alcohol.

Among these, a polyvinyl alcohol including a sulfonic acid-modified polyvinyl alcohol alone or a polyvinyl alcohol including a sulfonic acid-modified polyvinyl alcohol and a pyrrolidone ring-modified polyvinyl alcohol is more preferably used. A polyvinyl alcohol including the sulfonic acid-modified polyvinyl alcohol alone can provide better water solubility than a polyvinyl alcohol including a pyrrolidone ring-modified polyvinyl alcohol or an unmodified polyvinyl alcohol. A polyvinyl alcohol including a sulfonic acid-modified polyvinyl alcohol and a pyrrolidone ring-modified polyvinyl alcohol can provide more improved blocking resistance and resultantly allows spreading of a rolled film with a smaller force than a polyvinyl alcohol including the sulfonic acid-modified polyvinyl alcohol alone.

Regarding the viscosity of a 4% by weight aqueous solution of the polyvinyl alcohol measured at 20°C, the lower limit is preferably 3 mPa·s and the upper limit thereof is preferably 30 mPa·s. When the viscosity is 3 mPa·s or higher, the resulting water-soluble film can have sufficiently improved film strength. When the viscosity is 30 mPa·s or lower, the dissolution time of the film can be sufficiently shortened. The lower limit of the viscosity is more preferably 6 mPa·s, still more preferably 8 mPa·s, and the upper limit is more preferably 25 mPa·s, still more preferably 20 mPa·s.

The viscosity can be measured in conformity with JIS K 6726.

In 100% by weight of the water-soluble packaging film of the present invention, the lower limit of the amount of the polyvinyl alcohol is preferably 70% by weight and the upper limit thereof is preferably 95% by weight.

When the amount of the polyvinyl alcohol satisfies the lower limit, the water-soluble packaging film can be a better-quality film without bleeding of a plasticizer therefrom. When the amount of the polyvinyl alcohol satisfies the above upper limit, the water-soluble packaging film can have further better strength to be excellently appropriate as a film material for packaging chemicals or the like.

(Plasticizer)

The water-soluble packaging film of the present invention contains a plasticizer.

The water-soluble packaging film is required to have high tensile strength and high durability because it may be conveyed, stored, or used in hot and humid regions or cold regions. Especially, impact resistance at low temperatures is considered to be important. Containing a plasticizer, the water-soluble packaging film of the present invention can have a lower glass transition point, which improves the durability of the film at low temperatures. Containing the plasticizer,

the water-soluble packaging film can also have better solubility in water.

The plasticizer may be any plasticizer commonly used as a plasticizer for a polyvinyl alcohol. Examples thereof include: polyhydric alcohols such as glycerol, diglycerol, diethylene glycol, trimethylolpropane, triethylene glycol, dipropylene glycol, and propylene glycol.

The examples also include polyethers such as polyethylene glycol and polypropylene glycol; phenol derivatives such as bisphenol A and bisphenol S; amide compounds such as N-methylpyrrolidone; compounds prepared by adding ethylene oxide to polyhydric alcohols such as glycerol, pentaerythritol, and sorbitol; and water. These may be used alone, or in combination of two or more.

Among the above plasticizers, preferred are glycerol, diglycerol, trimethylolpropane, polyethylene glycol, polypropylene glycol, triethylene glycol, dipropylene glycol, and propylene glycol because improvement in water solubility and film physical properties can be both achieved at high levels. Since the water solubility is markedly improved, particularly preferred are glycerol, diglycerol, trimethylolpropane, and propylene glycol.

The water-soluble packaging film of the present invention contains 3 to 20 parts by weight of the plasticizer based on 100 parts by weight of the polyvinyl alcohol. When the amount of the plasticizer is 3 parts by weight or more, the effect of adding the plasticizer can be sufficiently exerted. When the amount of the plasticizer is 20 parts by weight or less, bleeding of the plasticizer can be reduced or prevented, improving the anti-blocking properties of the resulting water-soluble packaging film.

The lower limit of the amount of the plasticizer is preferably 4 parts by weight, and the upper limit thereof is preferably 15 parts by weight. The lower limit is more preferably 5 parts by weight, and the upper limit is more preferably 12 parts by weight.

(Dicarboxylic acid containing a hydroxy group)

The water-soluble packaging film of the present invention contains a dicarboxylic acid containing a hydroxy group (hereinafter, also referred to as a hydroxy group-containing dicarboxylic acid). The hydroxy group-containing dicarboxylic acid has a hydroxy group coefficient, which is a quotient of dividing the weight average molecular weight by the number of hydroxy groups, of 90 or more.

Containing the hydroxy group-containing dicarboxylic acid allows prevention of appearance defects over time and reduction or prevention of deterioration of sealing properties (especially, heat sealing properties) of the film, while improving the chemical resistance of the film. The hydroxy group-containing dicarboxylic acid includes salts of a hydroxy group-containing dicarboxylic acid.

Examples of the hydroxy group-containing dicarboxylic acid include hydroxy group-containing aliphatic dicarboxylic acids and hydroxy group-containing aromatic dicarboxylic acids, with hydroxy group-containing aliphatic dicarboxylic acids being preferred.

The hydroxy group-containing aliphatic dicarboxylic acids may be any hydroxy group-containing aliphatic dicarboxylic acid having the ratio of Mw/OH groups of 90 or more, and examples thereof include dicarboxylic acids such as malic acid, tartronic acid, and citramalic acid, with malic acid being particularly preferred.

Examples of the hydroxy group-containing aromatic dicarboxylic acids include 2-hydroxy phthalic acid, 3-hydroxy phthalic acid, 4-hydroxy phthalic acid, 2-hydroxy isophthalic acid, 4-hydroxy isophthalic acid, 5-hydroxy isophthalic acid, 3-hydroxy isophthalic acid, chelidamic acid, and 3,3'-methylene bis(6-hydroxy-benzoic acid).

Examples of the hydroxy group-containing dicarboxylic acid include alkali metal salts such as sodium salts and potassium salts, with sodium salts being preferred.

The hydroxy group-containing dicarboxylic acid has a hydroxy group coefficient (Mw/OH groups), which is a quotient of dividing the weight average molecular weight (Mw) by the number of hydroxy groups (the number of OH groups), of 90 or more. Such a range allows prevention of appearance defects (clouding) over time and reduction or prevention of deterioration of sealing properties (especially, heat sealing properties). The hydroxy group coefficient is preferably 300 or less.

In order to reduce or prevent bleeding and deterioration of sheet forming properties, the lower limit of the hydroxy group coefficient is more preferably 100, still more preferably 110, further more preferably 120, and the upper limit is more preferably 250, still more preferably 200, further more preferably 180, particularly more preferably 160, most preferably 150.

Furthermore, the number of hydroxy groups included in the hydroxy group-containing dicarboxylic acid is preferably 2 or less.

In addition, in order to reduce or prevent bleeding and deterioration of sheet forming properties, the weight average molecular weight of the hydroxy group-containing dicarboxylic acid is preferably 90 to 300. The upper limit is more preferably 250, still more preferably 200, further more preferably 190, particularly preferably 170, most preferably 155.

The water-soluble packaging film of the present invention contains 1 to 5 parts by weight of the hydroxy group-containing dicarboxylic acid based on 100 parts by weight of the polyvinyl alcohol. When the amount of the hydroxy group-containing dicarboxylic acid is 1 part by weight or more, the film can have sufficiently improved chemical resistance. When the amount of the hydroxy group-containing dicarboxylic acid is 5 parts by weight or less, appearance defects (clouding) over time and deterioration of sealing properties (especially, heat sealing properties) of the resulting water-soluble packaging film can be further prevented. The lower limit of the amount thereof is preferably 2 parts by weight, and the upper limit thereof is preferably 3.5 parts by weight.

(Dicarboxylic acid containing no hydroxy group)

The water-soluble packaging film of the present invention may further contain a dicarboxylic acid containing no hydroxy group (hereinafter, also referred to as a hydroxy group-free dicarboxylic acid) in addition to the hydroxy group-containing dicarboxylic acid.

This structure allows more reduction or prevention of appearance defects (clouding) over time or deterioration of sealing property (especially, heat sealing properties) of the film, while more improving the resistance to medicines of the film.

Examples of the hydroxy group-free dicarboxylic acid include hydroxy group-free aliphatic dicarboxylic acids and hydroxy group-free aromatic dicarboxylic acids, with hydroxy group-free aliphatic dicarboxylic acids being preferred.

Examples of the hydroxy group-free aliphatic dicarboxylic acids include succinic acid, malonic acid, glutaric acid, adipic acid, pimelic acid, suberic acid, glutaconic acid, azelaic acid, sebacic acid, maleic acid, and fumaric acid.

Examples of the hydroxy group-free aromatic dicarboxylic acids include terephthalic acid, phthalic acid, isophthalic acid, 4,4'-diphenylcarboxylic acid, 2,6-naphthalenedicarboxylic acid, 2,7-naphthalenedicarboxylic acid, and 1,5-naphthalenedicarboxylic acid.

Preferred among these is succinic acid.

The water-soluble packaging film of the present invention preferably contains 0.5 to 3 parts by weight of the hydroxy group-free dicarboxylic acid based on 100 parts by weight of the polyvinyl alcohol. When the amount of the hydroxy group-free dicarboxylic acid is 0.5 parts by weight or more, the chemical resistance can be sufficiently improved. When the amount of the hydroxy group-free dicarboxylic acid is 3 parts by weight or less, appearance defects (clouding) over time and deterioration of sealing properties (especially, heat sealing properties) of the resulting water-soluble packaging film can be further reduced or prevented. The lower limit of the amount thereof is more preferably 1 part by weight, and the upper limit thereof is more preferably 2 parts by weight.

In the case where the water-soluble packaging film of the present invention contains both of a hydroxy group-containing dicarboxylic acid and a hydroxy group-free dicarboxylic acid, the ratio of the amount of the hydroxy group-free dicarboxylic acid and the amount of the hydroxy group-containing dicarboxylic acid (hydroxy group-containing dicarboxylic acid content/hydroxy group-free dicarboxylic acid content) is preferably 1/0 to 1/5, more preferably 1/0 to 1/3. The range for the ratio is more preferably 10/1 to 1/3, particularly preferably 5/1 to 1/2. A ratio within the above range can achieve both of the resistance to medicines and reduction or prevention of deterioration of properties over time at high levels.

In an embodiment of the present invention, when the ratio of hydroxy group-containing dicarboxylic acid content/hydroxy group-free dicarboxylic acid content is 1/1 to 1/3, bleeding can be further reduced or prevented, and when the ratio is 3/1 to 1/1, the chemical resistance can be improved.

The lower limit of the thickness of the water-soluble packaging film of the present invention is preferably 10 um, and the upper limit is preferably 200 um. The lower limit is more preferably 20 um, and the upper limit is more preferably 150 um. The lower limit is still more preferably 25 um, and the upper limit is still more preferably 100 um. When the thickness of the water-soluble packaging film satisfies the lower limit, the film for packaging chemicals has still better strength. When the thickness of the water-soluble packaging film satisfies the upper limit, the film has still higher packaging properties, sealing properties (especially, heat sealing properties), and water solubility as a water-soluble packaging film. Moreover, the processing time is further shortened to further improve the productivity or to provide appropriate water solubility upon use of a packaged product.

The water-soluble packaging film of the present invention may further appropriately contain common additives such as colorants, flavoring agents, bulking agents, defoamers, releasing agents, ultraviolet absorbers, and bitterants, if needed.

The water-soluble packaging film of the present invention may be used for any application, and can be particularly preferably used as a chemical-packaging film. Having both of chemical resistance and high water solubility, the water-soluble packaging film of the present invention can be used as a packaging film for chemicals intended to be dissolved in water before use so as to eliminate the need to directly touch the chemicals, achieving easy handling. In other words, elimination of the need to directly touch chemicals inside the film achieves easy and safe handling. Upon use, the packaging film as well as the chemicals can be put in water, whereby the film is dissolved in water to release the chemicals inside, achieving safe handling with reduced waste.

(Production method of water-soluble packaging film)

The water-soluble packaging film of the present invention may be produced by any method, and is produced by, for example, casting a polyvinyl alcohol aqueous solution containing a sulfonic acid-modified polyvinyl alcohol, a pyrrolidone ring-modified polyvinyl alcohol, a plasticizer, a hydroxy group-containing dicarboxylic acid, and water on a support member and drying the casted solution. Specific examples of the production method include solution casting, roll coating, spin coating, screen coating, fountain coating, dipping, and spraying.

The polyvinyl alcohol aqueous solution contains water together with the polyvinyl alcohol, the plasticizer, and the hydroxy group-containing dicarboxylic acid. The PVA is mainly dissolved in the water.

In the polyvinyl alcohol aqueous solution, the lower limit of the water content based on 100 parts by weight of the components (including the polyvinyl alcohol) other than water is preferably 300 parts by weight, more preferably 400 parts by weight, still more preferably 500 parts by weight.

The upper limit of the water content is preferably 900 parts by weight, more preferably 800 parts by weight, still more preferably 700 parts by weight. When the water content satisfies the lower limit, the viscosity of the polyvinyl alcohol aqueous solution is appropriately low. In such a case, casting of the polyvinyl alcohol aqueous solution is facilitated. When the water content satisfies the upper limit, the viscosity of the polyvinyl alcohol aqueous solution is appropriately high. In such a case, casting of the polyvinyl alcohol aqueous solution is facilitated, the drying time is further shortened, resulting in production of a higher-quality water-soluble packaging film in which the orientation of the water-soluble packaging film is further improved.

The support member is preferably capable of keeping the polyvinyl alcohol aqueous solution on its surface upon casting of the polyvinyl alcohol aqueous solution and supporting the resulting water-soluble packaging film. The support member is made of, for example, a polyolefin, a polyester, an acrylic resin, or the like. Alternatively, the support member may be made of a material other than the above materials. Examples of the polyolefin include polyethylene, polypropylene, ethylene-vinyl acetate copolymers, and ethylene-vinyl alcohol copolymers. Examples of the polyester include polyethylene terephthalate and polyethylene naphthalate. The support member is preferably not made of polyvinyl alcohol.

The polyvinyl alcohol aqueous solution casted on the support member may be dried by any appropriate method. Examples of the drying method include natural drying and drying with heat at a temperature not higher than the glass transition temperature of the pyrrolidone ring-modified polyvinyl alcohol or the sulfonic acid-modified polyvinyl alcohol.

The film may be formed by, in addition to the casting method, extruding components in the form of a high viscosity solution or in a molten state by heating from a die using a pump or an extruder and molding it.

Upon production of the water-soluble packaging film of the present invention, the film can be stretched during or after the drying. Such a stretching step more suitably allows the orientation of the water-soluble packaging film to be within a predetermined range, whereby water solubility and the strength of the film can be appropriately controlled.

The stretching step may be performed by a method such as stretching with a roll, stretching with a tenter, stretching with a winding device, stretching utilizing drying shrinkage, or a combination of these.

The stretch ratio in the stretching step is preferably 1.05 to 3 times. The stretch ratio is more preferably 1.1 to 2.8 times.

- Advantageous Effects of Invention

The present invention can provide a water-soluble packaging film which is capable of preventing appearance defects such as clouding and deterioration of sealing properties, especially heat sealing properties, over a long period of time and achieving less deterioration and excellent water solubility after packaging.

BRIEF DESCRIPTION OF DRAWINGS

Fig. 1 shows a method for producing a tensile specimen for evaluating the retention of sealing strength.

DESCRIPTION OF EMBODIMENTS

Embodiments of the present invention are further specifically described in the following with reference to, but not limited to, examples.

(Example 1)

A 15% by weight polyvinyl alcohol aqueous solution was produced by dissolving in water 75 parts by weight of a sulfonic acid-modified polyvinyl alcohol having a structural unit represented by the formula (1), 25 parts by weight

of a pyrrolidone ring-modified polyvinyl alcohol having a structural unit represented by the formula (2), 8 parts by weight of a plasticizer, 2 parts by weight of a hydroxy group-containing dicarboxylic acid, and 1 part by weight of a hydroxy group-free dicarboxylic acid.

The sulfonic acid-modified polyvinyl alcohol having a structural unit represented by the formula (1) used was a sulfonic acid-modified polyvinyl alcohol having a polymerization degree of 1,200, a saponification degree of 95.4 mol%, and a sulfonic acid-modified amount of 4.0 mol%. $R^1$ in the formula (1) was a 2-methylene propylene group.

The pyrrolidone ring-modified polyvinyl alcohol having a structural unit represented by the formula (2) used was a pyrrolidone ring-modified polyvinyl alcohol having a polymerization degree of 1,000, a saponification degree of 95.8 mol%, and a pyrrolidone ring-modified amount of 4.0 mol%.

The plasticizer in an amount of 8 parts by weight contained 4 parts by weight of glycerol (available from FUJIFILM Wako Pure Chemical Corporation) and 4 parts by weight of diglycerol (available from Sakamoto Yakuhin Kogyo Co., Ltd.). The hydroxy group-containing dicarboxylic acid used was malic acid (available from FUSO CHEMICAL CO., LTD.). The hydroxy group-free dicarboxylic acid used was succinic acid (available from FUSO CHEMICAL CO., LTD.).

The obtained polyvinyl alcohol aqueous solution was applied to a polyethylene terephthalate (PET) film (thickness: 50 um) as a support member with an auto film applicator (available from Tester Sangyo Co., Ltd., "PI-1210"), and dried at 80°C for 5 minutes and then at 100°C for 20 minutes. Thereby, a sheet of a water-soluble packaging film (thickness: 50 um) laminated on the support member was obtained.

(Example 2)

A sheet of a water-soluble packaging film (thickness: 50 um) laminated on a support member was obtained in the same manner as in Example 1, except that 3 parts by weight of malic acid was used in place of 2 parts by weight of malic acid and 1 part by weight of succinic acid.

(Example 3)

A sheet of a water-soluble packaging film (thickness: 50 um) laminated on a support member was obtained in the same manner as in Example 1, except that 25 parts by weight of an unmodified polyvinyl alcohol (polymerization degree: 1,300, saponification degree: 88.0 mol%) was used in place of 25 parts by weight of the pyrrolidone ring-modified polyvinyl alcohol (polymerization degree: 1,000, saponification degree: 95.8 mol%, pyrrolidone ring-modified amount: 4.0 mol%).

(Example 4)

A sheet of a water-soluble packaging film (thickness: 50 um) laminated on a support member was obtained in the same manner as in Example 1, except that the pyrrolidone ring-modified polyvinyl alcohol was not added and the amount of the sulfonic acid-modified polyvinyl alcohol added was changed to 100 parts by weight.

(Examples 5 to 7 and 9 to 15)

A sheet of a water-soluble packaging film (thickness: 50 um) laminated on a support member was obtained in the same manner as in Example 1, except that the sulfonic acid-modified polyvinyl alcohol, the pyrrolidone ring-modified polyvinyl alcohol, and the unmodified polyvinyl alcohol as shown in Table 1 were used.

The sulfonic acid-modified polyvinyl alcohol had a structural unit represented by the formula (1), and the pyrrolidone ring-modified polyvinyl alcohol had a structural unit represented by the formula (2).

(Example 8)

A sheet of a water-soluble packaging film (thickness: 50 um) laminated on a support member was obtained in the same manner as in Example 1, except that 3.3 parts by weight of glycerol and 4.3 parts by weight of diglycerol as plasticizers, 1.5 parts by weight of malic acid as a hydroxy group-containing dicarboxylic acid, and 0.7 parts by weight of succinic acid as a hydroxy group-free dicarboxylic acid were used.

(Comparative Example 1)

A sheet of a water-soluble packaging film (thickness: 50 um) laminated on a support member was obtained in the same manner as in Example 1, except that 3 parts by weight of citric acid was used in place of 2 parts by weight of malic acid and 1 part by weight of succinic acid.

(Comparative Example 2)

A sheet of a water-soluble packaging film (thickness: 50 um) laminated on a support member was obtained in the same manner as in Comparative Example 1, except that the pyrrolidone ring-modified polyvinyl alcohol was not added and the amount of the sulfonic acid-modified polyvinyl alcohol added was changed to 100 parts by weight.

(Comparative Example 3)

A sheet of a water-soluble packaging film (thickness: 50 um) laminated on a support member was obtained in the same manner as in Example 1, except that 3 parts by weight of tartaric acid was used in place of 2 parts by weight of malic acid and 1 part by weight of succinic acid.

(Comparative Example 4)

A sheet of a water-soluble packaging film (thickness: 50 um) laminated on a support member was obtained in the same manner as in Example 1, except that 2 parts by weight of malic acid and 1 part by weight of succinic acid were not added.

(Comparative Example 5)

A sheet of a water-soluble packaging film (thickness: 50 um) laminated on a support member was obtained in the same manner as in Example 1, except that 0.5 parts by weight of malic acid was used in place of 2 parts by weight of malic acid and 1 part by weight of succinic acid.

(Comparative Example 6)

A sheet of a water-soluble packaging film (thickness: 50 um) laminated on a support member was obtained in the same manner as in Example 1, except that 7 parts by weight of malic acid was used in place of 2 parts by weight of malic acid and 1 part by weight of succinic acid.

(Comparative Example 7)

A sheet of a water-soluble packaging film (thickness: 50 um) laminated on a support member was obtained in the same manner as in Example 1, except that 3 parts by weight of lactic acid was used in place of 2 parts by weight of malic acid and 1 part by weight of succinic acid.

(Comparative Example 8)

A sheet of a water-soluble packaging film (thickness: 50 um) laminated on a support member was obtained in the same manner as in Example 1, except that 4 parts by weight of sodium citrate was used in place of 2 parts by weight of malic acid and 1 part by weight of succinic acid.

(Comparative Example 9)

A sheet of a water-soluble packaging film (thickness: 50 um) laminated on a support member was obtained in the same manner as in Example 1, except that 4 parts by weight of acetic acid was used in place of 2 parts by weight of malic acid and 1 part by weight of succinic acid.

(Evaluation)

Each of the water-soluble packaging films of the examples and comparative examples was peeled off from the support and was then subjected to the following evaluations. Table 1 shows the results.

(1) Appearance retention over time (haze measurement)

The resulting water-soluble packaging film was cut into a 5 cm × 5 cm piece to provide a measurement sample. The obtained measurement sample was left in a constant temperature/humidity oven at a temperature of 40°C and a relative humidity of 85%RH for 10 days.

The haze value of the resulting film was measured with a haze meter (NDH5000, available from Nippon Denshoku Industries Co., Ltd.).

(2) Sealing strength retention

The resulting water-soluble packaging film was cut into two 10 cm square sheets, and the sheets were left to stand in the same conditions as in the "(1) haze measurement". The two sheets of the film were then laminated and sealed with a seal tester. The sealing was carried out by pressure bonding at a sealing bar temperature of 140°C (actual surface temperature: 135°C), a set pressure of 2.8 kgf/$cm^2$, and a pressing duration of 0.5 seconds.

As shown in Fig. 1, a 15 mm-width tensile specimen 3 defined by the dotted line, including a sealed portion 2 (the hatched portion, sealed width: about 1 cm) was cut out from a sheet 1 after sealing. The resulting tensile specimen was pulled at a speed of 100 mm/min and the peeling strength was measured with AUTOGRAPH AGS-H

(available from Shimadzu Corporation).

(3) Chemical resistance (water solubility after packaging)

The resulting water-soluble packaging film was left to stand in an environment at 23°C and 50%RH for 15 hours, and was then cut into a 8 cm × 14 cm piece. Separately, a sheet of non-woven cloth (made of PE and PP) was cut into a 6 cm × 12 cm piece.

The water-soluble packaging film was folded into half so as to sandwich the sheet of non-woven cloth folded into half. Then, 30 g of trichloroisocyanuric acid tablets (ϕ30 mm × 15 mm) were placed in the folded non-woven cloth sheet. Thereafter, three open sides of the water-soluble packaging film were sealed with a width of 1 cm, whereby a packaged product containing the trichloroisocyanuric acid tablets was obtained. The resulting packaged product was placed in a 500-mL glass sealing container and the container was placed in an oven at a temperature of 60°C for 21 days. The packaged product was then opened and the content was removed, and the film was used as a film for chemical resistance evaluation.

The film for chemical resistance evaluation was left to stand in an environment at 23°C and 50%RH for 15 hours, and was then cut into a 3 cm × 1.5 cm piece to provide a specimen. The weight (Ws) of the specimen was measured and the specimen was placed in a PE bottle (20 mL). The PE bottle was charged with about 12 ml of water and was then shaken at 180 rpm for 10 minutes. The resulting liquid was filtered with a pre-weighed stainless mesh (Wm, 200 mesh), and the stainless mesh after filtering was dried in an oven at 80°C.

The stainless mesh was then left to stand in an environment at 23°C and 50%RH for 15 hours, and the weight (Wt) of the mesh was then measured. The dissolution rate in water was calculated according to the following formula.

$$\text{Dissolution rate in water (\%)} = [Ws - (Wt - Wm)]/Ws \times 100\ (\%)$$

[Table 1 - Part 1]

| | | | Example | | | | | | | |
|---|---|---|---|---|---|---|---|---|---|---|
| | | | 1 | 2 | 3 | 4 | 5 | 6 | 7 | 8 |
| PVA resin | Sulfonic acid-modified polyvinyl alcohol | Polymerization degree | 1200 | 1200 | 1200 | 1200 | 1200 | 1200 | 1200 | 1200 |
| | | Saponification degree (mol%) | 95.4 | 95.4 | 95.4 | 95.4 | 95.4 | 95.4 | 95.4 | 95.4 |
| | | Sulfonic acid-modified amount (mol%) | 4 | 4 | 4 | 4 | 4 | 4 | 4 | 4 |
| | | Part by weight | 75 | 75 | 75 | 100 | 60 | 25 | 75 | 75 |
| | Pyrrolidone ring-modified polyvinyl alcohol | Polymerization degree | 1000 | 1000 | - | - | 1000 | 1000 | 1000 | 1000 |
| | | Saponification degree (mol%) | 95.8 | 95.8 | - | - | 95.8 | 95.8 | 95.8 | 95.8 |
| | | Pyrrolidone ring-modified amount (mol%) | 4 | 4 | - | - | 4 | 4 | 4 | 4 |
| | | Part by weight | 25 | 25 | - | - | 20 | 75 | 25 | 25 |
| | Unmodified polyvinyl alcohol | Polymerization degree | - | - | 1300 | - | 1300 | - | - | - |
| | | Saponification degree (mol%) | - | - | 88 | - | 88 | - | - | - |
| | | Part by weight | - | - | 25 | - | 20 | - | - | - |
| Plasticizer | Glycerol | Part by weight | 4 | 4 | 4 | 4 | 4 | 4 | 4 | 3.3 |
| | Diglycerol | Part by weight | 4 | 4 | 4 | 4 | 4 | 4 | 4 | 4.3 |
| Hydroxy group-containing tricarboxylic acid | Citric acid (number of carboxyl groups: 3, number of OH groups: 1, Mw/OH groups: 192) | Part by weight | - | - | - | - | - | - | - | - |

(continued)

| | | | Example | | | | | | | |
|---|---|---|---|---|---|---|---|---|---|---|
| | | | 1 | 2 | 3 | 4 | 5 | 6 | 7 | 8 |
| Hydroxy group-containing dicarboxylic acid | Tartaric acid (number of carboxyl groups: 2, number of OH groups: 2, Mw/OH groups: 75) | Part by weight | - | - | - | - | - | - | - | - |
| | Malic acid (number of carboxyl groups: 2, number of OH groups: 1, Mw/OH groups: 134) | Part by weight | 2 | 3 | 2 | 2 | 2 | 2 | 2 | 1.5 |
| Hydroxy group-containing monocarboxylic acid | Lactic acid (number of carboxyl groups: 1, number of OH groups: 1, Mw/OH groups: 90) | Part by weight | - | - | - | - | - | - | - | - |
| Hydroxy group-free monocarboxylic acid | Acetic acid (number of carboxyl groups: 1, number of OH groups: 0, Mw/OH groups: -) | Part by weight | - | - | - | - | - | - | - | - |
| Hydroxy group-free dicarboxylic acid | Succinic acid (number of carboxyl groups: 2, number of OH groups: 0, Mw/OH groups: -) | Part by weight | 1 | - | 1 | 1 | 1 | 1 | 1 | 0.7 |
| Hydroxy group-containing tricarboxylic acid salt | Sodium citrate (number of carboxyl groups: 3, number of OH groups: 1, Mw/OH groups: 258) | Part by weight | - | - | - | - | - | - | - | - |
| Evaluation result | Appearance retention over time | Haze (%) | 3 | 12 | 9 | 4 | 11 | 6 | 4 | 3 |
| | Retention of sealing strength | Sealing strength (N/ 15 mm) | 7.5 | 6.7 | 7.2 | 5.3 | 7.0 | 6.8 | 7.1 | 7.5 |
| | Chemical resistance | Dissolution rate in water (%) | 87 | 88 | 91 | 81 | 85 | 80 | 88 | 90 |

[Table 1 - Part 2]

| | | | Example | | | | | | |
|---|---|---|---|---|---|---|---|---|---|
| | | | 9 | 10 | 11 | 12 | 13 | 14 | 15 |
| PVA resin | Sulfonic acid-modified polyvinyl alcohol | Polymerization degree | 1150 | 1200 | 1200 | 1200 | 1150 | 1600 | 900 |
| | | Saponification degree (mol%) | 94.8 | 95.4 | 95.4 | 95.4 | 94.8 | 95.4 | 95.4 |
| | | Sulfonic acid-modified amount (mol%) | 9 | 4 | 4 | 4 | 6 | 4 | 4 |
| | | Part by weight | 75 | 75 | 85 | 75 | 75 | 75 | 75 |
| | Pyrrolidone ring-modified polyvinyl alcohol | Polymerization degree | 1000 | 1100 | - | - | 1000 | 1000 | 1000 |
| | | Saponification degree (mol%) | 95.8 | 95.1 | - | - | 95.8 | 95.8 | 95.8 |
| | | Pyrrolidone ring-modified amount (mol%) | 4 | 6 | - | - | 4 | 4 | 4 |
| | | Part by weight | 25 | 25 | - | - | 25 | 25 | 25 |
| | Unmodified polyvinyl alcohol | Polymerization degree | - | - | 700 | 1800 | - | - | - |
| | | Saponification degree (mol%) | - | - | 98.4 | 92.0 | - | - | - |
| | | Part by weight | - | - | 15 | 25 | - | - | - |
| Plasticizer | Glycerol | Part by weight | 4 | 4 | 4 | 4 | 4 | 4 | 4 |
| | Diglycerol | Part by weight | 4 | 4 | 4 | 4 | 4 | 4 | 4 |
| Hydroxy group-containing tricarboxylic acid | Citric acid (number of carboxyl groups: 3, number of OH groups: 1, Mw/OH groups: 192) | Part by weight | - | - | - | - | - | - | - |

(continued)

| | | | Example | | | | | | |
|---|---|---|---|---|---|---|---|---|---|
| | | | 9 | 10 | 11 | 12 | 13 | 14 | 15 |
| Hydroxy group-containing dicarboxylic acid | Tartaric acid (number of carboxyl groups: 2, number of OH groups: 2, Mw/OH groups: 75) | Part by weight | - | - | - | - | - | - | - |
| | Malic acid (number of carboxyl groups: 2, number of OH groups: 1, Mw/OH groups: 134) | Part by weight | 2 | 2 | 2 | 2 | 2 | 2 | 2 |
| Hydroxy group-containing monocarboxylic acid | Lactic acid (number of carboxyl groups: 1, number of OH groups: 1, Mw/OH groups: 90) | Part by weight | - | - | - | - | - | - | - |
| Hydroxy group-free monocarboxylic acid | Acetic acid (number of carboxyl groups: 1, number of OH groups: 0, Mw/OH groups: -) | Part by weight | - | - | - | - | - | - | - |
| Hydroxy group-free dicarboxylic acid | Succinic acid (number of carboxyl groups: 2, number of OH groups: 0, Mw/OH groups: -) | Part by weight | 1 | 1 | 1 | 1 | 1 | 1 | 1 |
| Hydroxy group-containing tricarboxylic acid salt | Sodium citrate (number of carboxyl groups: 3, number of OH groups: 1, Mw/OH groups: 258) | Part by weight | - | - | - | - | - | - | - |

(continued)

| | | | Example | | | | | | |
|---|---|---|---|---|---|---|---|---|---|
| | | | 9 | 10 | 11 | 12 | 13 | 14 | 15 |
| Evaluation result | Appearance retention over time | Haze (%) | 15 | 5 | 14 | 12 | 8 | 4 | 4 |
| | Retention of sealing strength | Sealing strength (N/15 mm) | 6.7 | 7.0 | 6.3 | 6.5 | 7.2 | 7.5 | 7.2 |
| | Chemical resistance | Dissolution rate in water (%) | 82 | 85 | 89 | 91 | 83 | 90 | 85 |

[Table 1 - Part 3]

| | | | Comparative Example | | | | | | | | |
|---|---|---|---|---|---|---|---|---|---|---|---|
| | | | 1 | 2 | 3 | 4 | 5 | 6 | 7 | 8 | 9 |
| PVA resin | Sulfonic acid-modified polyvinyl alcohol | Polymerization degree | 1200 | 1200 | 1200 | 1200 | 1200 | 1200 | 1200 | 1200 | 1200 |
| | | Saponification degree (mol%) | 95.4 | 95.4 | 95.4 | 95.4 | 95.4 | 95.4 | 95.4 | 95.4 | 95.4 |
| | | Sulfonic acid-modified amount (mol%) | 4 | 4 | 4 | 4 | 4 | 4 | 4 | 4 | 4 |
| | | Part by weight | 75 | 100 | 75 | 75 | 75 | 75 | 75 | 75 | 75 |
| | Pyrrolidone ring-modified polyvinyl alcohol | Polymerization degree | 1000 | - | 1000 | 1000 | 1000 | 1000 | 1000 | 1000 | 1000 |
| | | Saponification degree (mol%) | 95.8 | - | 95.8 | 95.8 | 95.8 | 95.8 | 95.8 | 95.8 | 95.8 |
| | | Pyrrolidone ring-modified amount (mol%) | 4 | - | 4 | 4 | 4 | 4 | 4 | 4 | 4 |
| | | Part by weight | 25 | - | 25 | 25 | 25 | 25 | 25 | 25 | 25 |
| | Unmodified polyvinyl alcohol | Polymerization degree | - | - | - | - | - | - | - | - | - |
| | | Saponification degree (mol%) | - | - | - | - | - | - | - | - | - |
| | | Part by weight | - | - | - | - | - | - | - | - | - |
| Plasticizer | Glycerol | Part by weight | 4 | 4 | 4 | 4 | 4 | 4 | 4 | 4 | 4 |
| | Diglycerol | Part by weight | 4 | 4 | 4 | 4 | 4 | 4 | 4 | 4 | 4 |
| Hydroxy group-containing tricarboxylic acid | Citric acid (number of carboxyl groups: 3, number of OH groups: 1, Mw/OH groups: 192) | Part by weight | 3 | 3 | - | - | - | - | - | - | - |

(continued)

| | | | Comparative Example | | | | | | | | |
|---|---|---|---|---|---|---|---|---|---|---|---|
| | | | 1 | 2 | 3 | 4 | 5 | 6 | 7 | 8 | 9 |
| Hydroxy group-containing dicarboxylic acid | Tartaric acid (number of carboxyl groups: 2, number of OH groups: 2, Mw/OH groups: 75) | Part by weight | - | - | 3 | - | - | - | - | - | - |
| | Malic acid (number of carboxyl groups: 2, number of OH groups: 1, Mw/OH groups: 134) | Part by weight | - | - | - | - | 0.5 | 7 | - | - | - |
| Hydroxy group-containing monocarboxylic acid | Lactic acid (number of carboxyl groups: 1, number of OH groups: 1, Mw/OH groups: 90) | Part by weight | - | - | - | - | - | - | 3 | - | - |
| Hydroxy group-free monocarboxylic acid | Acetic acid (number of carboxyl groups: 1, number of OH groups: 0, Mw/OH groups: -) | Part by weight | - | - | - | - | - | - | - | - | 4 |
| Hydroxy group-free dicarboxylic acid | Succinic acid (number of carboxyl groups: 2, number of OH groups: 0, Mw/OH groups: -) | Part by weight | - | - | - | - | - | - | - | - | - |
| Hydroxy group-containing tricarboxylic acid salt | Sodium citrate (number of carboxyl groups: 3, number of OH groups: 1, Mw/OH groups: 258) | Part by weight | - | - | - | - | - | - | - | 4 | - |
| Evaluation result | Appearance retention over time | Haze (%) | 32 | 29 | 37 | 3 | 3 | 25 | 3 | 40 | 7 |
| | Retention of sealing strength | Sealing strength (N/15 mm) | 2.9 | 2.6 | 2.2 | 7.1 | 7.1 | 2.3 | 7.2 | 1.8 | 7.3 |
| | Chemical resistance | Dissolution rate in water (%) | 71 | 73 | 75 | 42 | 48 | 85 | 45 | 60 | 35 |

INDUSTRIAL APPLICABILITY

The present invention can provide a water-soluble packaging film which is capable of preventing appearance defects such as clouding and deterioration of sealing properties, especially heat sealing properties, over a long period of time and achieving less deterioration and excellent water solubility after packaging.

## Claims

1. A water-soluble packaging film comprising:

   a polyvinyl alcohol;
   a plasticizer; and
   a dicarboxylic acid containing a hydroxy group,
   the dicarboxylic acid containing a hydroxy group having a hydroxy group coefficient, which is a quotient of dividing a weight average molecular weight by the number of hydroxy groups, of 90 or more,
   the film containing the dicarboxylic acid containing a hydroxy group in an amount of 1 to 5 parts by weight.

2. The water-soluble packaging film according to claim 1, further comprising a dicarboxylic acid containing no hydroxy group.

3. The water-soluble packaging film according to claim 2, containing the dicarboxylic acid containing no hydroxy group in an amount of 0.5 to 3 parts by weight based on 100 parts by weight of the polyvinyl alcohol.

4. The water-soluble packaging film according to claim 1, 2, or 3,
   wherein the polyvinyl alcohol includes a sulfonic acid-modified polyvinyl alcohol.

5. The water-soluble packaging film according to claim 4, containing the sulfonic acid-modified polyvinyl alcohol in an amount of 10 to 100 parts by weight in 100 parts by weight of the polyvinyl alcohol.

6. The water-soluble packaging film according to claim 1, 2, 3, 4, or 5,
   wherein the polyvinyl alcohol further includes a pyrrolidone ring-modified polyvinyl alcohol.

7. The water-soluble packaging film according to claim 6, containing the pyrrolidone ring-modified polyvinyl alcohol in an amount of 0.1 to 50 parts by weight in 100 parts by weight of the polyvinyl alcohol.

## Patentansprüche

1. Wasserlösliche Verpackungsfolie, umfassend:

   einen Polyvinylalkohol,
   einen Weichmacher, und
   eine Dicarbonsäure, die eine Hydroxygruppe enthält,
   wobei die Dicarbonsäure, die eine Hydroxygruppe enthält, einen Hydroxygruppenkoeffizienten aufweist, der ein Quotient der Teilung eines gewichtsmittleren Molekulargewichts durch die Anzahl an Hydroxygruppen von 90 oder mehr ist,
   die Folie, die die Dicarbonsäure enthält, die eine Hydroxygruppe enthält, in einer Menge von 1 bis 5 Gewichtsteilen.

2. Wasserlösliche Verpackungsfolie nach Anspruch 1, ferner umfassend eine Dicarbonsäure, die keine Hydroxygruppe enthält.

3. Wasserlösliche Verpackungsfolie nach Anspruch 2, enthaltend die Dicarbonsäure, die keine Hydroxygruppe enthält, in einer Menge von 0,5 bis 3 Gewichtsteilen basierend auf 100 Gewichtsteilen des Polyvinylalkohols.

4. Wasserlösliche Verpackungsfolie nach Anspruch 1, 2 oder 3,
   wobei der Polyvinylalkohol einen sulfonsäuremodifizierten Polyvinylalkohol beinhaltet.

5. Wasserlösliche Verpackungsfolie nach Anspruch 4, enthaltend den sulfonsäuremodifizierten Polyvinylalkohol in einer Menge von 10 bis 100 Gewichtsteilen in 100 Gewichtsteilen des Polyvinylalkohols.

6. Wasserlösliche Verpackungsfolie nach Anspruch 1, 2, 3, 4 oder 5,
wobei der Polyvinylalkohol ferner einen pyrrolidonringmodifizierten Polyvinylalkohol beinhaltet.

7. Wasserlösliche Verpackungsfolie nach Anspruch 6, enthaltend den pyrrolidonringmodifizierten Polyvinylalkohol in einer Menge von 0,1 bis 50 Gewichtsteilen in 100 Gewichtsteilen des Polyvinylalkohols.

## Revendications

1. Film d'emballage soluble dans l'eau comprenant :

   un poly(alcool vinylique) ;
   un plastifiant ; et
   un acide dicarboxylique contenant un groupe hydroxy,
   l'acide dicarboxylique contenant un groupe hydroxy ayant un coefficient de groupe hydroxy, qui est un quotient divisant une masse moléculaire moyenne en masse par le nombre de groupes hydroxy, de 90 ou supérieur,
   le film contenant l'acide dicarboxylique contenant un groupe hydroxy dans une quantité de 1 à 5 parties en masse.

2. Film d'emballage soluble dans l'eau selon la revendication 1, comprenant de plus un acide dicarboxylique ne contenant pas de groupe hydroxy.

3. Film d'emballage soluble dans l'eau selon la revendication 2, contenant l'acide dicarboxylique ne contenant pas de groupe hydroxy dans une quantité de 0,5 à 3 parties en masse sur la base de 100 parties en masse du poly(alcool vinylique).

4. Film d'emballage soluble dans l'eau selon la revendication 1, 2, ou 3,
dans lequel le poly(alcool vinylique) inclut un poly(alcool vinylique) modifié par un acide sulfonique.

5. Film d'emballage soluble dans l'eau selon la revendication 4, contenant le poly(alcool vinylique) modifié par un acide sulfonique dans une quantité de 10 à 100 parties en masse dans 100 parties en masse du poly(alcool vinylique).

6. Film d'emballage soluble dans l'eau selon la revendication 1, 2, 3, 4, ou 5,
dans lequel le poly(alcool vinylique) inclut de plus un poly(alcool vinylique) modifié par un noyau pyrrolidone.

7. Film d'emballage soluble dans l'eau selon la revendication 6, contenant le poly(alcool vinylique) modifié par un noyau pyrrolidone dans une quantité de 0,1 à 50 parties en masse dans 100 parties en masse du poly(alcool vinylique).

FIG.1

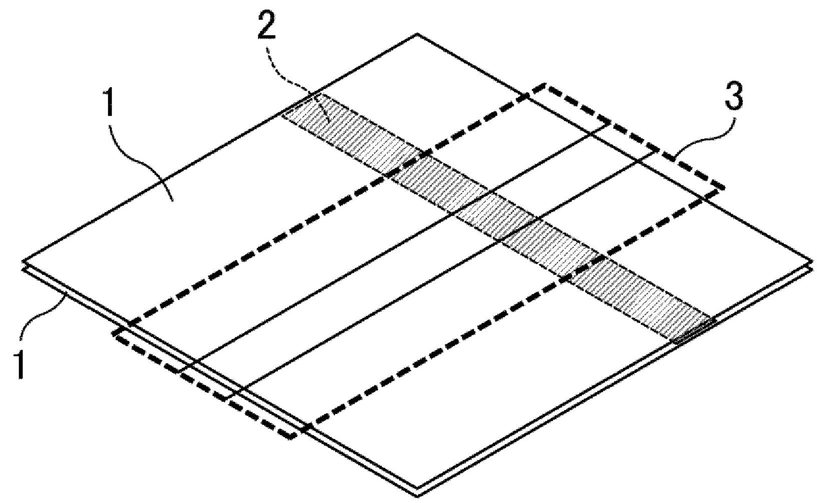

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003104435 A
- JP 2013518008 T
- JP 2001106854 A
- JP H02124945 A